# EUROPEAN PATENT SPECIFICATION

(11) **EP 4 058 531 B1**
(45) Date of publication and mention of the grant of the patent: **20.05.2026**
(21) Application number: 20807722.2
(22) Date of filing: 13.11.2020
(51) Int. Cl.: C09K 17/18, C08L 71/02, C08G 65/26

(54) **SOIL WETTER COMPOSITION**
BODENNÄSSUNGSZUSAMMENSETZUNG
COMPOSITION D'AGENT MOUILLANT POUR LE SOL

(30) Priority: 13.11.2019 GB 201916527
(43) Date of publication of application: 21.09.2022
(73) Proprietor: Croda International PLC, Goole East Yorkshire DN14 9AA (GB)
(72) Inventor: KNIGHT, Kathryn Marie, Goole, East Yorkshire DN14 9AA (GB); WEATHERHEAD, Laura Elizabeth, Goole, East Yorkshire DN14 9AA (GB)
(74) Representative: Karfopoulos, Alexis Theo
(86) International application number: PCT/EP2020/082152
(87) International publication number: WO 2021/094594

(56) References cited:
- WO-A1-2012/024276
- WO-A1-2014/181099

## Description

The present invention relates to components for use in agrochemical active formulations to maintain and improve soil wetting, re-wetting and retention of moisture in the soil to which it is applied.

Soils can be naturally hydrophobic in nature; this is often exacerbated when the soil is left to dry for an extended time or has a high organic content. Soil hydrophobicity can lead to water pooling and surface run-off, this has a direct consequence on plant growth through restriction of water infiltration and supply to a plants root zone in the case of turf grass and field crops. Soil quality and physiochemical properties can directly affect the penetration and percolation of water throughout the soil profile.

To overcome this, the application of surfactants and polymers to soil is commonplace commercial practice for wetting of hydrophobic soils. Application of anionic wetting agents has been known for many decades to be advantageous to increasing water infiltration into hydrophobic soils. Typically, these materials suffer from balancing use rate with impeding crop damage and phytotoxicity.

The application of non-ionic wetting agents has increased over the last decade and is now commonplace for application to turf grass and amenities uses.

It remains advantageous to provide multifunctional wetting agent compositions which provide soil wetting but with the potential for optional combination with agrochemical materials for a variety of agrochemical crop applications.

Agrochemical ingredients, in particular pre-emergent herbicides are often applied directly to soil, which is naturally a hydrophobic substrate and doesn't interact favourably with water. The hydrophobic nature of the soil can limit the penetration and infiltration of irrigation-based applications. Consequences of such unfavourable interaction can lead to surface run off and reduced percolation and distribution of water within the soil. Agrochemical products and their dilutions are commonly applied as water-based formulations, hence highlighting the requirement for a soil treatment.

Document WO 2012/024276 discloses ethoxylated fatty acid mono-ester(s) of sorbitan with a fatty acid chain length from 8 to 14 and an overall degree of ethoxylation from 7 to 16. These compounds are disclosed for use as adjuvants in agrochemical formulations, particularly formulations of herbicides having differing weed control effects, notably of non-selective herbicide and selective herbicide. The adjuvant reduce/eliminates antagonism between differing types of herbicide.

Document WO 2014/181099 discloses a method for wetting and/or conditioning soil comprises applying a soil treatment composition containing hydrolysed protein to the soil. The soil treatment composition disclosed may contain a surfactant selected from ethylene oxide-propylene oxide (EO/PO) block copolymer and/or an alkyl polyglycoside. The soil treatment composition disclosed may also contain an additional alkoxylate surfactant.

The present invention seeks to provide the use of a soil treatment formulation which can be used either on its own or as part of an agrochemical composition, optionally in combination with an agrochemical active, where the compounds may provide desired soil wetting and soil moisture retention. The present invention also seeks to provide the use of agrochemical concentrates and dilute formulations comprising said compounds.

The present invention relates to enhancing the penetration of water into hydrophobic soil, and includes soil wetting, improved soil re-wetting, retention of moisture and percolation/filtration of water through soil zone. The soil must be well wetted to allow water to flow.

According to a first aspect of the present invention there is provided a soil treatment formulation comprising:
(i) ethoxylated/propoxylated fatty acid mono-esters of sorbitan in which the carbon chain length of the fatty acid is from 8 to 16, and the overall degree of ethoxylation is on average from 5 to 25;
(ii) ethylene oxide-propylene oxide copolymer, and
(iii) compatibilising surfactant selected from an alkoxylated fatty alcohol, alkoxylated fatty alcohol phosphate ester, and/or alkoxylated glycerides.

According to a second aspect of the present invention there is provided a method of making a soil treatment formulation of the first aspect, said method comprising mixing
(i) ethoxylated/propoxylated fatty acid mono-esters of sorbitan in which the carbon chain length of the fatty acid is from 8 to 16, and the overall degree of ethoxylation is on average from 5 to 25;
(ii) ethylene oxide-propylene oxide copolymer, and
(iii) compatibilising surfactant selected from an alkoxylated fatty alcohol, alkoxylated fatty alcohol phosphate ester, and/or alkoxylated glycerides.

According to a third aspect of the present invention there is provided an agrochemical formulation suitable for application to vegetation and/or soil, said formulation comprising a diluted soil treatment formulation of the first aspect, and optionally at least one agrochemical active and/or nutrient.

According to a fourth aspect of the invention, there is provided the use of a soil treatment formulation comprising
(i) ethoxylated/propoxylated fatty acid mono-esters of sorbitan in which the carbon chain length of the fatty acid is from 8 to 16, and the overall degree of ethoxylation is on average from 5 to 25;
(ii) ethylene oxide-propylene oxide copolymer, and
(iii) compatibilising surfactant selected from an alkoxylated fatty alcohol, alkoxylated fatty alcohol phosphate ester, and/or alkoxylated glycerides;
for improving the water retention and/or conditioning of soil.

The soil treatment formulation of the present invention may be used to improve the soil's physical qualities, in particular the wetting performance and moisture retention. The soil treatment formulation may be used to improve poor soils which have been damaged and have poor wetting ability. The soil treatment formulation may be used to make poor surfaces more usable and to maintain soils in a peak condition, and to improve soil percolation. The soil treatment formulation may be used to improve the water wetting ability, the water retention and/or uptake ability, of the surface. The use of the soil treatment formulation has been found to significantly enhance the water uptake/wetting rates in water repellent soil. The combination unexpectedly exhibit enhanced wetting rates (water infiltration) and improved uniformity of percolation to hydrophobic soil and plant growth media over that previously achieved in the art whilst at the same time are stable concentrates offering compatibility with a range of agrochemical materials.

The soil treatment formulation may be used on agricultural crops, turf grasses, seeds and in the production of plant growth media. The soil treatment formulation may be used on, for example, soil or sand.

As used herein, the terms 'for example,' 'for instance,' 'such as,' or 'including' are meant to introduce examples that further clarify more general subject matter. Unless otherwise specified, these examples are provided only as an aid for understanding the applications illustrated in the present disclosure, and are not meant to be limiting in any fashion.

It will be understood that, when describing the number of carbon atoms in a substituent group (e.g. 'C₁ to C₆ alkyl'), the number refers to the total number of carbon atoms present in the substituent group, including any present in any branched groups. Additionally, when describing the number of carbon atoms in, for example fatty acids, this refers to the total number of carbon atoms including the one at the carboxylic acid, and any present in any branch groups.

The ethoxylated/propoxylated fatty acid mono-esters of sorbitan comprises a carbon chain length of the fatty acid of from 8 to 16, and the overall degree of ethoxylation is on average from 5 to 25.

The ethoxylated fatty acid mono-esters of sorbitan are preferably compounds of formula (I):

Sorb-(AOₙ₁R¹)(AOₙ₂R²)(AOₙ₃R³)(AOₙ₄R⁴) (I)

wherein;
i) Sorb represents a residue obtained by removing four hydroxyl H atoms from sorbitan;
i) AO represents an ethyleneoxy or propyleneoxy residue;
ii) n1, n2, n3, and n4 each independently represent average values from 0 to 10, preferably 0.5 to 5;
iii) the total n1+n2+n3+n4 has an average value from 5 to 25, particularly 8 to 12; and
iv) R¹, R², R³, and R⁴ each independently represents H or an acyl group -C(O)-R⁵, where R⁵ is a C₇ to C₁₃ hydrocarbyl, more usually C₉ to C₁₃ hydrocarbyl, particularly about C₁₁ hydrocarbyl, particularly alkyl or alkenyl, especially linear alkyl or alkenyl, group.

It is to be understood that the sorbitan residue is obtainable by removal of the four hydroxyl H atoms, and the ethoxylated/propoxylated fatty acid mono-ester formed by each of the removed H atoms being substituted with the groups (AOₙ₁R¹), (AOₙ₂R²), (AOₙ₃R³), and (AOₙ₄R⁴).

Preferably, an average of 2.8 to 3.2 of the R¹, R², R³, and R⁴ groups are H and 0.8 to 1.2 of the R¹, R², R³, and R⁴ groups are acyl groups -C(O)-R⁵.

In the compounds of the invention, the sorbitan residue at the core of the molecule, corresponding to the residue 'Sorb' in formula (I), will typically be a mixture mainly of residues of 1,4-anhydrosorbitol, 1,5-anhydrosorbitol, and 3,6-anhydrosorbitol.

The mixture may also typically include some 1,4,3,6-dianhydrosorbitol (iso-sorbide), though the proportion of iso-sorbide if present is usually relatively low because the ethoxylated products from iso-sorbide esters may be less useful surfactants.

In contrast, the 20-ethoxylate sorbitan esters are hydrophilic surfactants typically with HLB values of about 15 or higher. These more highly ethoxylated polysorbates, such as Tween 20 (sorbitan monolaurate 20-ethoxylate), have been widely used in agrochemical formulations as adjuvants and as emulsifiers.

The carbon chain length of the fatty acid of the ethoxylated fatty acid mono-esters of sorbitan may preferably be from 10 to 14. More preferably, the carbon chain length is about 12.

The overall degree of ethoxylation/propoxylation may on average preferably be from 5 to 25. More preferably, the overall degree of ethoxylation may be on average about 10.

The esters of and used in the invention are desirably mono-esters. In this general type of ethoxylated sorbitan ester compound, nominal mono-esters are so called because the molar ration of sorbitol to fatty acid used to make the sorbitan ester precursor of the ethoxylated esters is approximately 1:1, although it is usual to employ a modest excess e.g. from 5 to 10% molar, of the fatty acid.

The cyclisation reaction (as described herein) will result in some products including sorbitol and iso-sorbide residues, as well those with sorbitan residues. Additionally the 'mono-esters' (and the corresponding ethoxylated derivatives) will include small proportions of compounds including unesterified polyol (sorbitol/sorbitan/iso-sorbide) residues, substantial proportions of mono- and di- fatty acyl esters, mainly of sorbitan, but including modest based on iso-sorbide and small proportions based on sorbitol, with some level of tri-and higher esters mainly based on sorbitan. This contrasts with the nominal "triesters" of sorbitan which contain major proportions of tri- and higher esters. Of course the range of individual compounds after ethoxylation will be even greater.

On initial esterification, it may be understood that the majority of the acyl residues react with primary hydroxyls in the sorbitol or sorbitan (corresponding to the 1- or 6-positions in sorbitol), but that during subsequent processing trans-esterification largely randomises the position of the acyl group(s). The ethoxylation/propoxylation will involve further trans-esterification so further randomising the acyl positions.

In the context of the compounds of formula (I) that the compounds are mono-esters generally means that the relative (molar) amounts of fatty acid and (normally) sorbitol used to make the intermediate sorbitan ester (see further below on synthesis) will approximately correspond to making a mono-ester.

Thus desirably, for each mole of sorbitan in the compounds of the invention as represented by formula (I), there will generally be on average from 0.8 to 1.2 acyl residues substituent on the sorbitan; i.e. referring to formula (I) from 0.8 to 1.2 of the groups R¹, R², R³, and R⁴ are acyl groups of the formula -C(O)-R⁵, and correspondingly 2.8 to 3.2 of the groups are hydrogen atoms. However, as noted above, esters with more than one acyl groups will also usually be present in the products as synthesised.

The fatty acid residue in the compounds of the invention, corresponding to the acyl group -C(O)R⁵ in formula (I), is a C₈ to C₁₄, particularly C₁₀ to C₁₄, more particularly about a C₁₂, fatty acid residue. As applied to practically available technical grade fatty acids, these ranges represent the average carbon chain length (which for any particular material may therefore be non-integral). Generally the chain length of the individual fatty acids in any such mixture will desirably be within 2 carbon atoms of the average. A particularly useful source of such acyl residues is technical grade lauric acid, typically derived from coconut oil which is a mixture of fatty acids having chain lengths predominantly from C₈ to C₁₄.

The compounds of and used in the invention can be made by methods generally known in the art for corresponding known compounds - the polysorbates. In particular, they may be made from sorbitan esters, which are known generally as a class, by reaction with ethylene oxide usually under basic catalysis. Base catalysis may be provided by sodium or potassium hydroxide or methoxide. The ethoxylation reaction may be carried out at a temperature typically from 150 to 180°C and at a pressure of from 400 to 650 kPa (gauge).

The sorbitan esters, used as starting materials for the ethoxylation reaction making the compounds of the invention, are generally known and may themselves be made by reacting sorbitol with a suitable fatty acid to form the sorbitan ester by anhydridisation cyclisation of the sorbitol to sorbitan and esterification. The suitable fatty acid comprises from 8 to 14 carbon chain length, preferably from 10 to 14, and more preferably about 12.

The molecular weight (weight average) of the ethoxylated/propoxylated fatty acid mono-esters of sorbitan is preferably in the range from 400 to 2,700, more preferably 500 to 2,000, particularly 550 to 1,800, further preferably, 550 to 1,600.

The HLB of the ethoxylated/propoxylated fatty acid mono-esters of sorbitan is preferably in the range from 4 to 25, more preferably 5 to 20, particularly 5 to 18.

Preferred specific examples of sorbitan esters may be selected from polyoxyethylene (20) sorbitan monolaurate, polyoxyethylene (8) sorbitan monolaurate, polyoxyethylene (12) sorbitan monolaurate, polyoxyethylene (16) sorbitan monolaurate, polyoxyethylene (5) polyoxypropylene (15) sorbitan monolaurate, polyoxyethylene (10) polyoxypropylene (10) sorbitan monolaurate, polyoxyethylene (15) polyoxypropylene (5) sorbitan monolaurate.

The compatibilising surfactant is selected from alkoxylated fatty alcohol or alkoxylated fatty alcohol phosphate ester, and/or alkoxylated glycerides. Preferably, alkoxylated fatty alcohol or alkoxylated fatty alcohol phosphate ester. More preferably, alkoxylated fatty alcohol.

The alkoxylated fatty alcohol may be selected from those having a C₄ to C₃₀ fatty chain and comprising from 1 to 30 oxyalkylene groups.

In a one embodiment the co-adjuvant is an alkoxylated alcohol of the general formula:

R⁶-O-(AO)ₓ-H (II)

wherein
R⁶ is a straight or branched chain, saturated or unsaturated, substituted or unsubstituted hydrocarbon group having from 4 to 30 carbon atoms;
AO is an oxyalkylene group; and
x represents an integer in the range from 1 to 30.

The oxyalkylene groups (AO) may be selected from groups of the formula -(C_{y}H_{2y}O)- where y is an integer selected from 2, 3, or 4. Preferably, y is 2 or 3.

The oxyalkylene group AO may be selected from oxyethylene, oxypropylene, oxybutylene, or oxytetramethylene. Preferably, the oxyalkylene group is selected from oxyethylene (EO) and/or oxypropylene (PO).

Where the oxyalkylene chain is homopolymeric, homopolymers of ethylene oxide or propylene oxide are preferred. More preferably, homopolymers of ethylene oxide are particularly preferred.

Where there is more than one oxyalkylene group present (i.e. where x is 2 or more) and at least two are part of the same oxyalkylene chain, the oxyalkylene groups may be the same or may be different along said oxyalkylene chain. In this embodiment, the oxyalkylene chain may be a block or random copolymer of differing oxyalkylene groups.

Where the viscosity of the formulation needs to be lowered, block or random copolymer of differing oxyalkylene groups in the alkoxylated fatty alcohol may be particularly preferred.

The number of oxyalkylene groups in each oxyalkylene chain (i.e. the value of the each parameter x) will be in the range from 1 to 30. Preferably, in the range from 2 to 25. More preferably, in the range from 3 to 10. Further preferably, in the range from 4 to 7.

The C₄ to C₃₀ hydrocarbyl may preferably be selected from a C₄ to C₃₀ alkyl or a C₄ to C₃₀ alkenyl.

The term 'alkyl' as used herein, unless otherwise defined, refers to saturated hydrocarbon radicals being straight chain, branched, or combinations thereof, containing from 4 to 30 carbon atoms. Preferably, the alkyls each contain from 6 to 24 carbon atoms. More preferably, 8 to 22 carbon atoms. Most preferably, 10 to 20 carbon atoms.

Examples of alkyl radicals may be independently selected from methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, henicosyl, docosyl, tricosyl, tetracosyl, pentacosyl, hexacosyl, heptacosyl, octacosyl, or branched variants thereof.

The alkyl radicals may preferably be selected from dodecyl, tridecyl, tetradecyl, pentadecyl, hexadecyl, heptadecyl, octadecyl, nonadecyl, eicosyl, or branched variants thereof.

The term 'alkenyl' as used herein, unless otherwise defined, refers to hydrocarbon radicals having at least one or a plurality, preferably no more than four, double bonds. The alkenyl radicals may be straight chain, or branched moieties, or combinations thereof.

The alkenyl radicals may each contain from 4 to 30 carbon atoms. Preferably, the alkenyls each contain from 5 to 26 carbon atoms. More preferably, 10 to 24 carbon atoms. Most preferably, 16 to 22 carbon atoms.

Examples of alkenyl radicals may be independently selected from ethyl, propenyl, butenyl, pentenyl, hexenyl, heptenyl, octenyl, nonenyl, decenyl, undecenyl, dodecenyl, tridecenyl, tetradecenyl, pentadecenyl, hexadecenyl, heptadecenyl, octadecenyl, nonadecenyl, eicosenenyl henicosenyl, docosenyl, tricosenyl, tetracosenyl, pentacosenyl, hexacosenyl, heptacosenyl, octacosenyl, or branched variants thereof.

The alkyl radicals may preferably be selected from dodecenyl, tridecenyl, tetradecenyl, pentadecenyl, hexadecenyl, heptadecenyl, octadecenyl, nonadecenyl, eicosenyl, or branched variants thereof.

More preferably, R⁶ may be derived from, and the residue of a fatty alcohol.

Where R⁶ is derived from a fatty alcohol, R⁶ represents an alkoxy group (R-O-) being a residue of a fatty alcohol.

The term 'residue of a fatty alcohol' as used herein refers to the moiety that is the resulting product of the fatty alcohol in a particular reaction scheme or subsequent formulation or chemical product, regardless of whether the moiety is actually obtained from the specified chemical species. A 'fatty alcohol residue' thereby refers to the moiety which results when a fatty alcohol participates in a particular reaction (i.e. the residue is a fatty alkoxy group R-O-). The fatty alcohol residue is therefore 'derived' from the respective fatty alcohol. It is understood that this moiety can be obtained by a reaction with a species other than the specified fatty alcohol per se, for example, by a reaction with an unsaturated fatty alcohol chloride, ester, or anhydride.

The fatty alcohols may preferably be selected from C₄ to C₃₀ fatty alcohols, more preferably C₆ to C₂₄ fatty alcohols, particularly C₁₀ to C₂₂ fatty alcohols, further preferably C₁₀ to C₁₆ fatty alcohols, and especially C₁₂ fatty alcohols.

The fatty alcohols may be selected from linear or branched fatty alcohols. The fatty alcohols may be selected from saturated or unsaturated fatty alcohols.

Where unsaturated fatty alcohols are present, these may be selected from unsaturated fatty alcohols comprising at least one unsaturated carbon-carbon double bond. Particularly preferred are unsaturated fatty alcohols having in the range from 1 to 3 carbon-carbon double bonds. Most preferred are mono-unsaturated fatty alcohols residues. The carbon-carbon double bond of the fatty chain may be present either in a cis or a trans configuration.

Preferably, the fatty alcohols residues used are derived from linear saturated fatty alcohols.

Suitable saturated and unsaturated fatty alcohols in particular may be selected from capryl alcohol pelargonic alcohol, capric alcohol, undecyl alcohol, lauryl alcohol, tridecyl alcohol, myristyl alcohol, pentadecyl alcohol, cetyl alcohol, palmitoleyl alcohol, heptadecyl alcohol, stearyl alcohol, nonadecyl alcohol, arachidyl alcohol, heneicosyl alcohol, or behenyl alcohol, oleyl alcohol, elaidyl alcohol, linoleyl alcohol, linolenyl alcohol, or erucyl alcohol.

In particular, unsaturated and saturated C₁₀ to C₁₆ fatty alcohols may be preferred. The fatty alcohols may preferably be selected from capric alcohol, lauryl alcohol, or myristyl alcohol.

Suitable non-ionic alkoxylates having utility in the context of the present invention may be selected from lauryl alcohol (4 EO) ethoxylate, lauryl alcohol (5 EO) ethoxylate, lauryl alcohol (6 EO) ethoxylate, oleyl (3 EO) ethoxylate, oleyl (5 EO) ethoxylate, or oleyl (10 EO) ethoxylate.

The molecular weight (weight average) of the alkoxylated fatty alcohols is preferably in the range from 120 to 1,760, more preferably 160 to 1,200, particularly 200 to 800, further preferably, 250 to 600, and especially 300 to 400.

In an alternative embodiment the solubiliser may be selected from alkoxylated fatty alcohol phosphate esters, preferably C10 to C30 mono- and/or di-ester phosphates.

The monoester phosphate suitably comprises, consists essentially of, or consists of compounds of formula R⁷-O-P-(=O)(OH)₂. The diester phosphate suitably comprises, consists essentially of, or consists of compounds of formula R⁷-O-P-(=O)(OR⁷)(OH).

R⁷ is suitably a C10 to C30 hydrocarbyl group, preferably an alkyl group. R⁷ may be saturated or unsaturated, linear or branched, but is preferably saturated, and more preferably linear. R⁷ is preferably a C12 to C24, more preferably C14 to C20, particularly C16 to C18, and especially C16 hydrocarbyl group, particularly alkyl group. It is not necessary that each R⁷ group in the diester phosphate be the same, and thus the diester phosphates may be asymmetrically substituted.

The phosphate esters used in the present invention may be suitably formed, as is known in the art, by reacting a fatty alcohol, e.g. of formula R⁷-OH, wherein R⁷ is as defined above, with a phosphorylating agent such polyphosphoric acid, phosphorus pentoxide, oxychloride or trichloride. In one embodiment, phosphorus pentoxide is preferred. The reaction can produce a statistical mixture of mono-, di- and tri-ester products and the proportions can be controlled to produce the desired ratio of esters, e.g. monoestendiester ratio, for example by varying the proportions of the starting materials. Suitable linear fatty alcohols include cetyl alcohol, stearyl alcohol, oleyl alcohol, lauryl alcohol, cocoyl alcohol, tetradecanol, arachidyl alcohol, behenyl alcohol and lignoceryl alcohol. Suitable branched fatty alcohols include isostearyl alcohol, isotetradecanol, isocetyl alcohol, isoarachidyl alcohol, isobehenyl alcohol and isolignoceryl alcohol; neo-alcohols such as neocapric alcohol; and/or anti-iso alcohols. Linear fatty alcohols are preferred, particularly cetyl alcohol and/or stearyl alcohol, and especially cetyl alcohol.

The fatty alcohol component in the composition according to the present invention is suitably of formula R⁸-OH wherein R⁸ is preferably a C12 to C24, more preferably C14 to C22, particularly C16 to C20, and especially C16 to C18 hydrocarbyl group, particularly alkyl group. The hydrocarbyl group may be saturated or unsaturated, linear or branched, but is preferably saturated, and more preferably linear. Suitable linear fatty alcohols include cetyl alcohol, stearyl alcohol, oleyl alcohol, lauryl alcohol, cocoyl alcohol, tetradecanol, arachidyl alcohol, behenyl alcohol and lignoceryl alcohol. Suitable branched fatty alcohols include isostearyl alcohol, isotetradecanol, isocetyl alcohol, isoarachidyl alcohol, isobehenyl alcohol and isolignoceryl alcohol; neo-alcohols such as neocapric alcohol; and/or anti-iso alcohols. Linear fatty acids are preferred.

The molecular weight (weight average) of the compatibilising surfactant is preferably in the range from 800 to 15,000, more preferably 1,000 to 8,000, particularly 1,200 to 5,000, further preferably, 1,500 to 3,000.

The HLB of the compatibilising surfactant is preferably in the range from 2 to 30, more preferably 3 to 35, particularly 3 to 24.

The percentage of ethylene oxide in the compatibilising surfactant is preferably in the range from 5 to 80, more preferably 8 to 70, particularly 10 to 65, further preferably, 12 to 60.

Preferred specific examples of the compatibilising surfactant may be selected from polyoxyethylene (60) almond oil, polyoxyethylene (5) C9-C11 alcohol, polyoxyethylene (6) tridecyl alcohol, polyoxyethylene (5) isotridecanol, and polyoxyethylene (5) alkyl ether phosphate.

In an alternative embodiment the compatibiliser may be selected from alkoxylated glycerides.

The alkoxylated glycerides may be derived from mono, di, or triglycerides, and comprise from 1 to 30 oxyalkylene groups. The oxyalkylene groups may be as described with reference to alkoxylated fatty alcohols.

The ethylene oxide-propylene oxide (EO/PO) copolymer may be a non-ionic surfactant is selected from polyalkylene oxide block copolymer(s) formed of ethylene and propylene oxide. It will be understood that the terms "*copolymer*" as used herein includes polymers with two components selected from ethylene oxide (EO) and propylene oxide (PO).

The copolymer may be selected from a random or block copolymer, preferably a block copolymer.

The ethylene oxide-propylene oxide copolymers (PEG/PPG) may include straight block polymeric glycols obtained for example by the addition of ethylene oxide on a condensation product of propylene oxide. The ethylene oxide-propylene oxide block copolymers may also include reverse block copolymers formed by the addition of polypropylene oxide on a condensation product of ethylene oxide. The ethylene oxide-propylene oxide copolymers may be end-capped, e.g. by alkyl groups, preferably C1 to C5 alkyl groups, more preferably methyl.

The ethylene oxide-propylene oxide copolymers preferably have an average molecular weight of greater than 1,000, more preferably in the range from 1,500 to 15,000, in particular 1,200 to 8,000, especially 1,500 to 3,000.

The ethylene oxide-propylene oxide copolymers preferably comprise (i) an ethylene oxide content in the range from 10 to 80 wt.%, in particular 10 to 50 wt.%, especially 15 to 35 wt.%, for example about 20 wt.%, and/or (ii) a propylene oxide content in the range from 20 to 90 wt.%, in particular 50 to 90 wt.%, especially 75 to 85 wt.%, for example about 80 wt.%.

Preferably, the ethylene oxide-propylene oxide copolymer has the formula (EO)ₓ-(PO)_{y}-(EO)_{z} wherein x and z are each independently in the range from 1 to 15, preferably 2 to 10, more preferably 3 to 8, in particular 4 to 7, especially 5 to 6, for example 5.5. x and z may be the same or different. y is preferably in the range from 10 to 50, preferably 20 to 40, in particular 30 to 35, for example 33. Preferably, the ethylene oxide-propylene oxide (EO/PO) block copolymer has the formula (EO)_{5.5}-(PO)₃₃-(EO)_{5.5}, having an average molecular weight of approximately 2400.

Preferred specific examples of the ethylene oxide-propylene oxide copolymers may be selected from PEG-PPG-PEG polymer, 40% EO PPG size 4, PEG-PPG-PEG polymer, 10% EO PPG size 6, PEG-PPG-PEG polymer, 20% EO PPG size 6, PEG-PPG-PEG polymer, 50% EO PPG size 10, and PEG-PPG-PEG polymer, 10% EO PPG size 12.

The polysorbate, compatibilising surfactant, and ethylene oxide-propylene oxide copolymer are combined to provide a preblend or concentrate formulation which is suitable for forming in to an end use formulation.

The amount of polysorbate comprised in the preblend may be in the range of between 20 wt.% and 60 wt.%. More preferably, in the range of between 30% and 50%. Further preferably, in the range of between 35% and 45%.

The amount of compatibilising surfactant comprised in the preblend may be in the range of between 1 wt.% and 20 wt.%. More preferably, in the range of between 4% and 15%. Further preferably, in the range of between 5% and 12%. Most preferably, in the range of between 8% and 12%, as a percentage of the total preblend.

The amount of ethylene oxide-propylene oxide copolymer comprised in the preblend may be in the range of between 30 wt.% and 70 wt.%. More preferably, in the range of between 40% and 60%. Further preferably, in the range of between 45% and 55%.

The concentrate formulation may be formulated such that it does not contain or has only small amounts of other components. Preferably at least 90 wt.% of the concentrate is comprised of the polysorbate, compatibilising surfactant, and ethylene oxide-propylene oxide copolymer, more preferably 93 wt.%, further preferably 95 wt.%, most preferably 98 wt.%.

**In** an alternative embodiment there is provided a soil treatment formulation comprising ethoxylated/propoxylated fatty acid mono-esters of sorbitan in which the carbon chain length of the fatty acid is from 8 to 16 and the overall degree of ethoxylation is on average from 5 to 25, and ethylene oxide-propylene oxide copolymer. Said concentrate formulation may be formulated such that it does not contain or has only small amounts of other components. Preferably at least 95 wt.% of the concentrate is comprised of the polysorbate, and ethylene oxide-propylene oxide copolymer, more preferably 98 wt.%.

In the practice of the invention, the wetting composition of the invention can be applied as a concentrate or more preferably by dispersing the concentrate according to the present invention in water for use as a diluted aqueous end use formulation.

In one embodiment, therefore the wetting composition of the invention can be used in the spray solution to the soil in order to facilitate the infiltration of water, with or without agrochemical/nutrient/soil conditioner.

The concentrate may therefore be diluted with water and optionally other soil conditioners and fertilisers for application, added to a tank mixture, or formed into a built-in adjuvant (comprising an active or nutrient) for addition into a tank mixture.

The soil treatment formulations are designed to be diluted with water (or a water based liquid) to form the corresponding end-use agrochemical formulations, typically spray mixture.

Agrochemically active compounds require a formulation which allows the active compounds to be taken up by the plant/the target organisms. When concentrates (solid or liquid) are used as the source of active agrochemical and/or adjuvant, the concentrates will typically be diluted to form end-use formulations, typically spray formulations. The dilution may be with water at from 1 to 10,000, particularly 10 to 1,000, times the total weight of the concentrate to form the spray formulation.

Said soil treatment formulations may be diluted for use resulting in a dilute composition resulting in an agrochemical active concentration of about 0.1 wt.% to about 1 wt.%. In said dilute composition (for example, a spray formulation, where a spray application rate may be from 10 to 500 1.ha⁻¹) the agrochemical active concentration may be in the range from about 0.001 wt.% to about 1 wt.% of the total formulation as sprayed.

**In** an alternation embodiment the soil treatment formulation can be applied using an irrigation system rather than as a spay mixture. In such systems, for example for irrigaing turf, the amount of water may be higher and the application rate may be in the range from 50 to 1000 1.ha⁻¹.

Spray mixtures are aqueous agrochemical formulations including all the components which it is desired to apply to the plants or their environment. Spray formulations can be made up by simple dilution of the soil treatment formulations containing desired components (other than water), or a combination of diluting soil treatment formulations and adding further individual components or mixtures of components. Typically, such end use mixing is carried out in the tank from which the formulation is sprayed, or alternatively in a holding tank for filling the spray tank. Such mixing and mixtures are typically termed tank mixing and tank mixtures.

The spray formulations will typically have a pH within the range from moderately acidic (e.g. about 3) to moderately alkaline (e.g. about 10), and particular near neutral (e.g. about 5 to 8). More concentrated formulations will have similar degrees of acidity/alkalinity, but as they may be largely non-aqueous, pH is not necessarily an appropriate measure of this.

The agrochemical formulation may include solvents (other than water) such as monopropylene glycol, oils which can be vegetable or mineral oils such as spray oils. Such solvents may be included as a solvent for the surfactant adjuvant, and/or as a humectant, e.g. especially propylene glycol. When used such solvents will typically be included in an amount of from 5 wt.% to 500 wt.%, desirably 10 wt.% to 100 wt.%, by weight of the surfactant adjuvant. Such combinations can also include salts such as ammonium chloride and/or sodium benzoate, and/or urea especially as gel inhibition aids.

The diluted soil treatment formulation tank mix may be sprayed on soil or used as a foliar spray.

The soil treatment formulation, or diluted soil treatment formulation may also include other components as desired. These other components may be selected from those including:
▪ binders, particularly binders which are readily water soluble to give low viscosity solutions at high binder concentrations, such as polyvinylpyrrolidone; polyvinyl alcohol; carboxymethyl cellulose; gum arabic; sugars e.g. sucrose or sorbitol; starch; ethylene-vinyl acetate copolymers, sucrose and alginates,
▪ diluents, absorbents or carriers such as carbon black; talc; diatomaceous earth; kaolin; aluminium, calcium or magnesium stearate; sodium tripolyphosphate; sodium tetraborate; sodium sulphate; sodium, aluminium and mixed sodium-aluminium silicates; and sodium benzoate,
▪ disintegration agents, such as surfactants, materials that swell in water, for example carboxy methylcellulose, collodion, polyvinylpyrrolidone and microcrystalline cellulose swelling agents; salts such as sodium or potassium acetate, sodium carbonate, bicarbonate or sesquicarbonate, ammonium sulphate and dipotassium hydrogen phosphate;
▪ wetting agents such as alcohol ethoxylate and alcohol ethoxylate/propoxylate wetting agents;
▪ dispersants such as sulphonated naphthalene formaldehyde condensates and acrylic copolymers such as the comb copolymer having capped polyethylene glycol side chains on a polyacrylic backbone;
▪ emulsifiers such as alcohol ethoxylates, ABA block co polymers, or castor oil ethoxylates;
▪ antifoam agents, e.g. polysiloxane antifoam agents, typically in amounts of 0.005 wt.% to 10 wt.% of the formulation;
▪ viscosity modifiers such as commercially available water soluble or miscible gums, e.g. xanthan gums, and/or cellulosics, e.g. carboxy- methyl, ethyl or propylcellulose; and/or
▪ preservatives and/or anti-microbials such as organic acids, or their esters or salts such as ascorbic e.g. ascorbyl palmitate, sorbic e.g. potassium sorbate, benzoic e.g. benzoic acid and methyl and propyl 4-hydroxybenzoate, propionic e.g. sodium propionate, phenol e.g. sodium 2-phenylphenate; 1,2-benzisothiazolin-3-one; or formaldehyde as such or as paraformaldehyde; or inorganic materials such as sulphurous acid and its salts, typically in amounts of 0.01 wt.% to 1 wt.% of the formulation.

The soil wetter formulation, or soil wetter formulation, may also include agrochemical actives or nutrients as desired.

The agrochemical active may preferably be a solid phase agrochemical active. Solid agrochemical active compounds are to be understood in the present invention as meaning all substances customary for plant treatment, whose melting point is above 20°C (at standard pressure). Solid agrochemical actives will also include insoluble active ingredients, i.e. active ingredients whose solubility in water is such that a significant solid content exists in the concentrate after addition.

Agrochemical actives refer to biocides which, in the context of the present invention, are plant protection agents, more particular chemical substances capable of killing different forms of living organisms used in fields such as medicine, agriculture, forestry, and mosquito control. Also counted under the group of biocides are so-called plant growth regulators.

Biocides for use in agrochemical formulations of the present invention are typically divided into two sub- groups:
▪ pesticides, including fungicides, herbicides, insecticides, algicides, moluscicides, miticides, and rodenticides; and
▪ antimicrobials, including germicides, antibiotics, antibacterials, antivirals, antifungals, antiprotozoals, and antiparasites.

**In** particular, biocides selected from insecticides, fungicides, or herbicides may be particularly preferred.

The term 'pesticide' will be understood to refer to any substance or mixture of substances intended for preventing, destroying, repelling, or mitigating any pest. A pesticide may be a chemical substance or biological agent (such as a virus or bacteria) used against pests including insects, plant pathogens, weeds, mollusks, birds, mammals, fish, nematodes (roundworms), and microbes that compete with humans for food, destroy property, spread disease or are a nuisance. **In** the following examples, pesticides suitable for the agrochemical compositions according to the present invention are given.

An herbicide is a pesticide used to kill unwanted plants. Selective herbicides kill specific targets while leaving the desired crop relatively unharmed. Some of these act by interfering with the growth of the weed and are often based on plant hormones. Herbicides used to clear waste ground are non-selective and kill all plant material with which they come into contact. Herbicides are widely used in agriculture and in landscape turf management. They are applied in total vegetation control (TVC) programs for maintenance of highways and railroads. Smaller quantities are used in forestry, pasture systems, and management of areas set aside as wildlife habitat.

Suitable herbicides may be selected from the group comprising: aryloxycarboxylic acid e.g. MCPA, aryloxyphenoxypropionates e.g. clodinafop, cyclohexanedione oximes e.g. sethoxydim, dinitroanilines e.g. trifluralin, diphenyl ethers e.g. oxyfluorfen, hydroxybenzonitriles e.g. bromoxynil, sulphonylureas e.g. nicosulphuron, triazolopyrimidines e.g. penoxsulam, triketiones e.g. mesotriones, or ureas e.g. diuron.

Particularly preferred herbicides may be selected from pre-emergence herbicides. As used herein, "*pre-emergent herbicide*" refers to an herbicide that acts on newly germinating seedlings before they emerge.

Pre-emergent herbicide may be selected from triazine-based herbicides (such as ametryn, atrazine, metribuzin, terbuthylazine, prometryn, propazine, simazine, trietazine, desmetryn, terbutryne, terbumeton, and cyanazine), trifluralin, siduron, indaziflam, isoxaben, dithiopyr, benefin, pendimethalin, prodiamine, flufenacet, diflufenican, and aclonifen. Pre-emergent herbicides for which the present invention may find particular application may be selected from trifluralin, siduron, isoxaben, dithiopyr, benefin, pendimethalin, prodiamine, atrazine, flufenacet, diflufenican, metribuzin, and aclonifen.

A fungicide is a chemical control of fungi. Fungicides are chemical compounds used to prevent the spread of fungi in gardens and crops. Fungicides are also used to fight fungal infections. Fungicides can either be contact or systemic. A contact fungicide kills fungi when sprayed on its surface. A systemic fungicide has to be absorbed by the plants and the actives redistributed before contacting with the fungus..

Examples for suitable fungicides, according to the present invention, encompass the following species: (3-ethoxypropyl)mercury bromide, 2-methoxyethylmercury chloride, 2-phenylphenol, 8-hydroxyquinoline sulphate, 8-phenylmercuri oxyquinoline, acibenzolar, acylamino acid fungicides, acypetacs, aldimorph, aliphatic nitrogen fungicides, allyl alcohol, amide fungicides, ampropylfos, anilazine, anilide fungicides, antibiotic fungicides, aromatic fungicides, aureofungin, azaconazole, azithiram, azoxystrobin, barium polysulphide, benalaxyl-M, benodanil, benomyl, benquinox, bentaluron, benthiavalicarb, benzalkonium chloride, benzamacril, benzamide fungicides, benzamorf, benzanilide fungicides, benzimidazole fungicides, benzimidazole precursor fungicides, benzimidazolylcarbamate fungicides, benzohydroxamic acid, benzothiazole fungicides, bethoxazin, binapacryl, biphenyl, bitertanol, bithionol, blasticidin-S, Bordeaux mixture, boscalid, bridged diphenyl fungicides, bromuconazole, bupirimate, Burgundy mixture, buthiobate, butylamine, calcium polysulphide, captafol, captan, carbamate fungicides, carbamorph, carbanilate fungicides, carbendazim, carboxin, carpropamid, carvone, Cheshunt mixture, chinomethionat, chlobenthiazone, chloraniformethan, chloranil, chlorfenazole, chlorodinitronaphthalene, chloroneb, chloropicrin, chlorothalonil, chlorquinox, chlozolinate, ciclopirox, climbazole, clotrimazole, conazole fungicides, conazole fungicides (imidazoles), conazole fungicides (triazoles), copper(II) acetate, copper(II) carbonate, basic, copper fungicides, copper hydroxide, copper naphthenate, copper oleate, copper oxychloride, copper(II) sulphate, copper sulphate, basic, copper zinc chromate, cresol, cufraneb, cuprobam, cuprous oxide, cyazofamid, cyclafuramid, cyclic dithiocarbamate fungicides, cycloheximide, cyflufenamid, cymoxanil, cypendazole, cyproconazole, cyprodinil, dazomet, DBCP, debacarb, decafentin, dehydroacetic acid, dicarboximide fungicides, dichlofluanid, dichlone, dichlorophen, dichlorophenyl, dicarboximide fungicides, dichlozoline, diclobutrazol, diclocymet, diclomezine, dicloran, diethofencarb, diethyl pyrocarbonate, difenoconazole, diflumetorim, dimethirimol, dimethomorph, dimoxystrobin, diniconazole, dinitrophenol fungicides, dinobuton, dinocap, dinocton, dinopenton, dinosulphon, dinoterbon, diphenylamine, dipyrithione, disulphiram, ditalimfos, dithianon, dithiocarbamate fungicides, DNOC, dodemorph, dodicin, dodine, DONATODINE, drazoxolon, edifenphos, epoxiconazole, etaconazole,etem, ethaboxam, ethirimol, ethoxyquin, ethylmercury 2,3-dihydroxypropyl mercaptide, ethylmercury acetate, ethylmercury bromide, ethylmercury chloride, ethylmercury phosphate, etridiazole, famoxadone, fenamidone, fenaminosulph, fenapanil, fenarimol, fenbuconazole, fenfuram, fenhexamid, fenitropan, fenoxanil, fenpiclonil, fenpropidin, fenpropimorph, fentin, ferbam, ferimzone, fluazinam, fludioxonil, flumetover, fluopicolide, fluoroimide, fluotrimazole, fluoxastrobin, fluquinconazole, flusilazole, flusulphamide, flutolanil, flutriafol, folpet, formaldehyde, fosetyl, fuberidazole, furalaxyl, furametpyr, furamide fungicides, furanilide fungicides, furcarbanil, furconazole, furconazole-cis, furfural, furmecyclox, furophanate, glyodin, griseofulvin, guazatine, halacrinate, hexachlorobenzene, hexachlorobutadiene, hexachlorophene, hexaconazole, hexylthiofos, hydrargaphen, hymexazol, imazalil, imibenconazole, imidazole fungicides, iminoctadine, inorganic fungicides, inorganic mercury fungicides, iodomethane, ipconazole, iprobenfos, iprodione, iprovalicarb, isoprothiolane, isovaledione, kasugamycin, kresoxim-methyl, lime sulphur, mancopper, mancozeb, maneb, mebenil, mecarbinzid, mepanipyrim, mepronil, mercuric chloride, mercuric oxide, mercurous chloride, mercury fungicides, metalaxyl, metalaxyl-M, metam, metazoxolon, metconazole, methasulphocarb, methfuroxam, methyl bromide, methyl isothiocyanate, methylmercury benzoate, methylmercury dicyandiamide, methylmercury pentachlorophenoxide, metiram, metominostrobin, metrafenone, metsulphovax, milneb, morpholine fungicides, myclobutanil, myclozolin, N-(ethylmercury)-p-toluenesulphonanilide, nabam, natamycin, nitrostyrene, nitrothal-isopropyl, nuarimol, OCH, octhilinone, ofurace, organomercury fungicides, organophosphorus fungicides, organotin fungicides, orysastrobin, oxadixyl, oxathiin fungicides, oxazole fungicides, oxine copper, oxpoconazole, oxycarboxin, pefurazoate, penconazole, pencycuron, pentachlorophenol, penthiopyrad, phenylmercuriurea, phenylmercury acetate, phenylmercury chloride, phenylmercury derivative of pyrocatechol, phenylmercury nitrate, phenylmercury salicylate, phenylsulphamide fungicides, phosdiphen, phthalide, phthalimide fungicides, picoxystrobin, piperalin, polycarbamate, polymeric dithiocarbamate fungicides, polyoxins, polyoxorim, polysulphide fungicides, potassium azide, potassium polysulphide, potassium thiocyanate, probenazole, prochloraz, procymidone, propamocarb, propiconazole, propineb, proquinazid, prothiocarb, prothioconazole, pyracarbolid, pyraclostrobin, pyrazole fungicides, pyrazophos, pyridine fungicides, pyridinitril, pyrifenox, pyrimethanil, pyrimidine fungicides, pyroquilon, pyroxychlor, pyroxyfiir, pyrrole fungicides, quinacetol, quinazamid, quinconazole, quinoline fungicides, quinone fungicides, quinoxaline fungicides, quinoxyfen, quintozene, rabenzazole, salicylanilide, silthiofam, simeconazole, sodium azide, sodium orthophenylphenoxide, sodium pentachlorophenoxide, sodium polysulphide, spiroxamine, streptomycin, strobilurin fungicides, sulphonanilide fungicides, sulphur, sultropen, TCMTB, tebuconazole, tecloftalam, tecnazene, tecoram, tetraconazole, thiabendazole, thiadifluor, thiazole fungicides, thicyofen, thifluzamide, thiocarbamate fungicides, thiochlorfenphim, thiomersal, thiophanate, thiophanate-methyl, thiophene fungicides, thioquinox, thiram, tiadinil, tioxymid, tivedo, tolclofos-methyl, tolnaftate, tolylfluanid, tolylmercury acetate, triadimefon, triadimenol, triamiphos, triarimol, triazbutil, triazine fungicides, triazole fungicides, triazoxide, tributyltin oxide, trichlamide, tricyclazole, trifloxystrobin, triflumizole, triforine, triticonazole, unclassified fungicides, undecylenic acid, uniconazole, urea fungicides, validamycin, valinamide fungicides, vinclozolin, zarilamid, zinc naphthenate, zineb, ziram, zoxamide, and mixtures thereof.

An insecticide is a pesticide used against insects in all developmental forms, and includes ovicides and larvicides used against the eggs and larvae of insects. Insecticides are used in agriculture, medicine, industry and the household.

Suitable insecticides may include those selected from:
▪ Chlorinated insecticides such as, for example, Camphechlor, DDT, Hexachloro- cyclohexane, gamma-Hexachlorocyclohexane, Methoxychlor, Pentachlorophenol, TDE, Aldrin, Chlordane, Chlordecone, Dieldrin, Endosulphan, Endrin, Heptachlor, Mirex, and mixtures thereof;
▪ Organophosphorous compounds such as, for example, Acephate, Azinphos-methyl, Bensulide, Chlorethoxyfos, Chlorpyrifos, Chlorpyriphos-methyl, Diazinon, Dichlorvos (DDVP), Dicrotophos, Dimethoate, Disulphoton, Ethoprop, Fenamiphos, Fenitrothion, Fenthion, Fosthiazate, Malathion, Methamidophos, Methidathion, Methyl-parathion, Mevinphos, Naled, Omethoate, Oxydemeton-methyl, Parathion, Phorate, Phosalone, Phosmet, Phostebupirim, Pirimiphos-methyl, Profenofos, Terbufos, Tetrachlorvinphos, Tribufos, Trichlorfon, and mixtures thereof;
▪ Carbamates such as, for example, Aldicarb, Carbofuran, Carbaryl, Methomyl, 2-(1-Methylpropyl)phenyl methylcarbamate, and mixtures thereof;
▪ Pyrethroids such as, for example, Allethrin, Bifenthrin, Deltamethrin, Permethrin, Resmethrin, Sumithrin, Tetramethrin, Tralomethrin, Transfluthrin, and mixtures thereof;
▪ Plant toxin derived compounds such as, for example, Derris (rotenone), Pyrethrum, Neem (Azadirachtin), Nicotine, Caffeine, and mixtures thereof;
▪ Neonicotinoids, such as imidacloprid;
▪ Abamectins, e.g. emamactin;
▪ Oxadiazines, such as indoxacarb;
▪ Anthranilic diamides such as rynaxypyr.

Rodenticides are a category of pest control chemicals intended to kill rodents. Suitable rodenticides may include anticoagulants, metal phosphides, phosphides, and calciferols (vitamins D), and derivatives thereof.

Miticides are pesticides that kill mites. Antibiotic miticides, carbamate miticides, formamidine miticides, mite growth regulators, organochlorine, permethrin and organophosphate miticides all belong to this category. Molluscicides are pesticides used to control mollusks, such as moths, slugs and snails. These substances include metaldehyde, methiocarb and aluminium sulphate. A nematicide is a type of chemical pesticide used to kill parasitic nematodes (a phylum of worm).

In the following examples, antimicrobials suitable for agrochemical compositions according to the present invention are given.

Bactericidal disinfectants may include those selected from active chlorines, active oxygen, iodine, concentrated alcohols, phenolic substances, cationic surfactants, strong oxidisers, heavy metals and their salts, and concentrated strong acids and alkalis between pH of from 1 to 13. Suitable antiseptics (i.e., germicide agents that can be used on human or animal body, skin, mucoses, wounds and the like) may include diluted chlorine preparations, iodine preparations, peroxides, alcohols with or without antiseptic additives, weak organic acids, phenolic compounds, and cation-active compounds.

Particular preference is given to active compounds from the classes of the azole fungicides (azaconazole, bitertanol, bromuconazole, cyproconazole, diclobutrazole, difenoconazole, diniconazole, diniconazole-M, epoxiconazole, etaconazole, fenarimol, fenbuconazole, fluquinconazole, flurprimidol, flusilazole, flutriafol, furconazole, furconazole-cis, hexaconazole, imazalil, imazalil sulphate, imibenconazole, ipconazole, metconazole, myclobutanil, nuarimol, oxpoconazole, paclobutrazole, penconazole, pefurazoate, prochloraz, propiconazole, prothioconazole, pyrifenox, simeconazole, tebuconazole, tetraconazole, triadimefon, triadimenol, triflumizole, triforin, triticonazole, uniconazole, voriconazole, viniconazole), strobilurin fungicides (azoxystrobin, dimoxystrobin, fluoxastrobin, kresoxim-methyl, metominostrobin, orysastrobin, picoxystrobin, pyraclostrobin, trifloxystrobin), the SDH fungicides, the chloronicotinyl insecticides (clothianidin, dinotefuran, imidacloprid, thiamethoxam, nitenpyram, nithiazin, acetamiprid, nitenpyram, thiacloprid), the insecticidal ketoenols (spirodiclofen, spiromesifen, spirotetramate), fiproles (fiprole, ethiprole) and butenolides, and also pymetrozine, fluopicolid, N-(3',4'-dichloro-5-fluoro-1,1'-biphenyl-2-yl)-3-(difluoromethyl)-1-methyl-1H-pyrazole-4-carboxamide and N-{2-(3-chloro-5-(trifluoromethyl)-2-pyridinyl]ethyl}-2-(trifluoromethyl)benzamide. Particular preference is also given to herbicides, in particular sulphonylureas, triketones and herbicidal ketoenols, and also safeners.

It is envisaged that the present invention will be particularly applicable for formulations which comprise pre-emergence herbicides.

Nutrients may be present in addition to, or as an alternative to, agrochemical actives. In such formulations the nutrient is typically in a dry form.

The nutrients may be solid phase nutrients, or present in a solution form. Solid nutrients are to be understood in the present invention as meaning substances whose melting point is above 20°C (at standard pressure). Solid nutrients will also include insoluble nutrient ingredients, i.e. nutrient ingredients whose solubility in water is such that a significant solid content exists in the concentrate after addition.

Nutrients refer to chemical elements and compounds which are desired or necessary to promote or improve plant growth. Suitable nutrients generally are described as macronutrients or micronutrients. Suitable nutrients for use in the concentrates according to the invention are all nutrient compounds.

Micronutrients typically refer to trace metals or trace elements, and are often applied in lower doses. Suitable micronutrients include trace elements selected from zinc, boron, chlorine, copper, iron, molybdenum, and manganese. The micronutrients may be in a soluble form or included as insoluble solids, and may be salts or chelated.

Macronutrients typically refer to those comprising nitrogen, phosphorus, and potassium, and include fertilisers such as ammonium sulphate, and water conditioning agents. Suitable macro nutrients include fertilisers and other nitrogen, phosphorus, potassium, calcium, magnesium, sulphur containing compounds, and water conditioning agents.

Suitable fertilisers include inorganic fertilisers that provide nutrients such as nitrogen, phosphorus, potassium or sulphur. Fertilisers may be included in diluted formulations at relatively low concentrations or as more concentrated solutions, which at very high levels may include solid fertiliser as well as solution.

It is envisaged that inclusion of the nutrient would be dependent upon the specific nutrient, and that micronutrients would typically be included at lower concentrations whilst macronutrients would typically be included at higher concentrations.

All of the features described herein may be combined with any of the above aspects, in any combination.

### Examples

In order that the present invention may be more readily understood, reference will now be made, by way of example, to the following description.

It will be understood that all tests and physical properties listed have been determined at atmospheric pressure and room temperature (i.e. 25°C), unless otherwise stated herein, or unless otherwise stated in the referenced test methods and procedures.

The following test methods were used to determine performance of the adjuvant compositions.

### • Canvas disc test (CDT)

Specified canvas discs (Cotton swatches ISO 8022) were dropped from a set distance (from the top surface area of the beaker, ~ 5 cm) to hit the surface of a 400 mL surfactant solution (different surfactant solutions were used 0.2, 0.4 and 0.5% w/v) in a 600 mL glass beaker.

Then, the time taken for the disc to sink into the solution was recorded as the wetting time (in sec or mins). This method is validated against the capillary rise test.

### • Rewetting

The re-wettability performance (or the residual activity) of the blends was tested using a series of capillary rise experiments. A soil plug (pre-dried at 50 °C) was placed in a 0.2% w/v aqueous solution of surfactant blend (40 mL) and the time taken for the solution to be absorbed into the soil plug recorded. The soil plugs, after the end of the experiment, were placed overnight in the oven (54 °C) to dry out.

After drying, the capillary rise test was repeated under the same conditions as described above, for a total of up to ten times (herein called re-wetting 1, re-wetting 2, etc.).

After the last re-wetting time, soil plugs were washed by slowly pouring 400 ml of deionised water on the top of the soil plugs (turf side up). Soil plugs were left to dry in the oven and next day the capillary rise experiment was re-assessed as in previous wetting experiments.

The following compounds were used in the tests:
P1 - polyoxyethylene (12) sorbitan monolaurate
P2 - polyoxyethylene (8) sorbitan monolaurate
P3 - polyoxyethylene (16) sorbitan monolaurate
P4 - polyoxyethylene (5) polyoxypropylene (15) sorbitan monolaurate
P5 - polyoxyethylene (10) polyoxypropylene (10) sorbitan monolaurate
P6 - polyoxyethylene (15) polyoxypropylene (5) sorbitan monolaurate
P7 - polyoxyethylene (20) sorbitan monolaurate
P8 - polyoxyethylene (4) sorbitan monolaurate
P9 - Polyoxyethylene (20) sorbitan monooleate
P10 - polyoxyethylene (20) sorbitan trioleate
C1 - polyoxyethylene (5) C9-C11 alcohol
C2 - polyoxyethylene (60) almond oil
C3 - polyoxyethylene (6) tridecyl alcohol
C4 - polyoxyethylene (5) alkyl ether phosphate
C5 - polyoxyethylene branched tridecyl phosphate
C6 - polyoxyethylene (4) lauryl ether
C7 - polyoxyethylene (7) C12-C15 alcohol
C8 - polyoxyethylene (2.5) C9-C11 alcohol
C9 - polyoxyethylene (10) C9-C11 alcohol
A1 - PEG-PPG-PEG polymer, 10% EO PPG size 6
A2 - PEG-PPG-PEG polymer, 20% EO PPG size 6

### Canvas Disc Test Results

A number of formulations were made and then subjected to the canvas disc test. Results are shown below in Table 1.

**Table 1. - Canvas disc results**

| **Formulation** | **Components** | | | **Composition ratio (wt.) (A:B:C)** | **Conc. w/w %** | **Wetting time (secs)** |
|---|---|---|---|---|---|---|
| | **A** | **B** | **C** | | | |
| T3 | P1 | C1 | A1 | 40:10:50 | 0.4 | 19.7 |
| T4 | P4 | C1 | A1 | 40:10:50 | 0.4 | 18.2 |
| T5 | P2 | C2 | A1 | 40:10:50 | 0.4 | 35.9 |
| T6 | P1 | C3 | A1 | 47:2.9:50.1 | 0.4 | 57.33 |
| T9 | P1 | C2 | A1 | 40:10:50 | 0.4 | 37.1 |
| T10 | P1 | C4 | A1 | 49:0.9:50.1 | 0.4 | 82 |
| T11 | P4 | C1 | A1 | 30:2.9:50.1 | 0.4 | 45 |
| T12 | P1 | C1 | A2 | 40:10:50 | 0.4 | 31.6 |
| T13 | P1 | C1 | A2 | 50:10:40 | 0.4 | 88.3 |
| T14 | P3 | C1 | A2 | 40:10:50 | 0.4 | 21.6 |
| T15 | P3 | C1 | A2 | 50:40:10 | 0.4 | 48.3 |
| T16 | P2 | C1 | A2 | 35:5:60 | 0.4 | 29.3 |
| T17 | P5 | C1 | A2 | 25:70:5 | 0.4 | 44.0 |
| T18 | P6 | C1 | A2 | 30:10:60 | 0.4 | 20.0 |
| T19 | P10 | C1 | A1 | 40:10:50 | 0.4 | 44.8 |
| T20 | P8 | C1 | A1 | 40:10:50 | 0.4 | 34.7 |
| T21 | P8 | C5 | A1 | 40:10:50 | 0.4 | 30.5 |
| T22 | P2 | C5 | A1 | 40:10:50 | 0.4 | 28.1 |
| T23 | P1 | C5 | A1 | 40:10:50 | 0.4 | 24.8 |
| T24 | P3 | C5 | A1 | 40:10:50 | 0.4 | 29.4 |
| T25 | P7 | C6 | A1 | 40:10:50 | 0.4 | 20.8 |
| T26 | P1 | C6 | A1 | 40:10:50 | 0.4 | 22.4 |
| T27 | P1 | C7 | A1 | 40:10:50 | 0.4 | 34.3 |
| T28 | P3 | C7 | A1 | 40:10:50 | 0.4 | 29.6 |
| T29 | P9 | C7 | A1 | 40:10:50 | 0.4 | 39.4 |
| T30 | P1 | C8 | A1 | 40:10:50 | 0.4 | 16.9 |
| T31 | P1 | C9 | A1 | 40:10:50 | 0.4 | 29.2 |
| T32 | P1 | C1 | A1 | 40:05:55 | 0.4 | 25.6 |
| T33 | P1 | C1 | A1 | 25:05:70 | 0.4 | 23.4 |
| T34 | P1 | C1 | A1 | 65:15:20 | 0.4 | 20 |
| T35 | P7 | C1 | A1 | 40:10:50 | 0.4 | 23.5 |
| T36 | P2 | C1 | A1 | 40:10:50 | 0.4 | 22 |
| T37 | P1 | C2 | A1 | 25.5:24:5:50 | 0.4 | 46 |
| T38 | P4 | C2 | A1 | 25.5:24:5:50 | 0.4 | 70.5 |

The formulations tested all provide good wetting times.

### Rewetting Test Results

A number of formulations were made and then subjected to the rewetting test. The results are shown below in Table 2.

The following formulations were used for the rewetting tests:
T19 - P1 (40 wt.%) + C1 (10 wt.%) + A1 (50 wt.%)
T20 - P4 (40 wt.%) + C1 (10 wt.%) + A1 (50 wt.%)
T21 - P1 (25.5 wt.%) + C2 (24.5 wt.%) + A1 (50 wt.%)
T22 - P4 (25.5 wt.%) + C2 (24.5 wt.%) + A1 (50 wt.%)

**Table 2. - Rewetting results**

| | **Blend** | | | |
|---|---|---|---|---|
| | **T19** | **T20** | **T21** | **T22** |
| 1st wetting | 72.5 | 78.5 | 87.5 | 84 |
| 2nd wetting | 41 | 39 | 41.5 | 52.5 |
| 3rd wetting | 44 | 39 | 39 | 50 |
| 4th wetting | 42 | 41 | 44.5 | 57.5 |
| 5th wetting | 47.5 | 40 | 39 | 60 |
| 6th wetting | 52.5 | 55 | 46.5 | 46.5 |
| 7th wetting | 49 | 51 | 56 | 62 |
| 8th wetting | 48.5 | 58.5 | 54 | 69 |
| 9th wetting | 49 | 47 | 59 | 63.5 |
| 10th wetting | 142.5 | 180 | 110 | 127.5 |

The formulations tested all provide good rewetting times (shown in seconds).

### Tank Mix Compatibility

The tank mix compatibility was evaluated using the official ASTM E1518 method. This method assesses the physical compatibility of pesticides in aqueous tank mixtures by a dynamic shaker method. For the tank mix compatibility formulation T3 as shown in Table 1 was used. Results of the compatibility test are shown in Table 3 below.

**Table 3. - Compatibility results**

| **Formulation of 1% in water with 0.1 % of T3** | **Visual result (30 min)** |
|---|---|
| Ammonium polyphosphate 10-34-0 | No separation, no clumping |
| Calcium nitrate 90 SL | No separation, no clumping |
| Diflufenican 500 SC | No separation, no clumping |
| Metribuzin 75 WDG | No separation, no clumping |

The formulation showed good compatibility as a tank mix with various actives.

A number of other formulations from Table 1 were also tested for tank mix compatibility.

**Table 4. - Compatibility results**

| **Formulation of 1% in water with 0.1 % of T3** | **Visual result (30 min)** | | | |
|---|---|---|---|---|
| | **T3/T19** | **T4/T20** | **T21** | **T22** |
| Ammonium polyphosphate 10-34-0 | NS,NC | NS,NC | NS,NC | NS,NC |
| Calcium nitrate 90 SL | NS,NC | NS,NC | NS,NC | NS,NC |
| Diflufenican 500 SC | NS,NC | NS,NC | NS,NC | NS,NC |
| Metribuzin 75 WDG | NS,NC | NS,NC | NS,NC | NS,NC |

| | | | | |
|---|---|---|---|---|
| NS,NC = no separation, no clumping | | | | |

Good compatibility was observed for the formulations as seen in Tables 3 and 4 since separation and clumping were not observed.

It is to be understood that the invention is not to be limited to the details of the above embodiments, which are described by way of example only. Many variations are possible.

## Claims

1. A soil treatment formulation comprising:
(i) ethoxylated/propoxylated fatty acid mono-esters of sorbitan in which the carbon chain length of the fatty acid is from 8 to 16, and the overall degree of ethoxylation is on average from 5 to 25;
(ii) ethylene oxide-propylene oxide copolymer, and
(iii) compatibilising surfactant selected from an alkoxylated fatty alcohol, alkoxylated fatty alcohol phosphate ester, and/or alkoxylated glycerides.

2. The formulation according to claim 1, wherein the ethoxylated fatty acid mono-esters of sorbitan are compounds of formula (I):
Sorb-(AOₙ₁R¹)(AOₙ₂R²)(AOₙ₃R³)(AOₙ₄R⁴) (I)
wherein;
i) Sorb represents a residue obtained by removing four hydroxyl H atoms from sorbitan;
i) AO represents an ethyleneoxy or propyleneoxy residue;
ii) n1, n2, n3, and n4 each independently represent average values from 0 to 10, preferably 0.5 to 5;
iii) the total n1+n2+n3+n4 has an average value from 5 to 25, particularly 8 to 12; and
iv) R¹, R², R³, and R⁴ each independently represents H or an acyl group -C(O)-R⁵, where R⁵ is a C₇ to C₁₃ hydrocarbyl, more usually C₉ to C₁₃ hydrocarbyl, particularly about C₁₁ hydrocarbyl, particularly alkyl or alkenyl, especially linear alkyl or alkenyl, group.

3. The formulation according to either claim 1 or claim 2, wherein the ethylene oxide-propylene oxide copolymer has an average molecular weight in the range from 1,500 to 15,000.

4. The formulation according to any preceding claim, wherein the compatibilising surfactant is alkoxylated fatty alcohol having a C₄ to C₃₀ fatty chain and comprising from 1 to 30 oxyalkylene groups.

5. The formulation according to any preceding claim, wherein the compatibilising surfactant is alkoxylated alcohol of the general formula:
R⁶-O-(AO)ₓ-H (II)
wherein
R⁶ is a straight or branched chain, saturated or unsaturated, substituted or unsubstituted hydrocarbon group having from 4 to 30 carbon atoms;
AO is an oxyalkylene group; and
x represents an integer in the range from 1 to 30.

6. A method of making a soil treatment formulation of any of claims 1 to 5, said method comprising mixing
(i) ethoxylated/propoxylated fatty acid mono-esters of sorbitan in which the carbon chain length of the fatty acid is from 8 to 16, and the overall degree of ethoxylation is on average from 5 to 25;
(ii) ethylene oxide-propylene oxide copolymer, and
(iii) compatibilising surfactant selected from an alkoxylated fatty alcohol, alkoxylated fatty alcohol phosphate ester, and/or alkoxylated glycerides.

7. An agrochemical formulation suitable for application to vegetation and/or soil, said formulation comprising a diluted soil treatment formulation of any of claims 1 to 5, and optionally at least one agrochemical active and/or nutrient.

8. Use of a soil treatment formulation comprising
(i) ethoxylated/propoxylated fatty acid mono-esters of sorbitan in which the carbon chain length of the fatty acid is from 8 to 16, and the overall degree of ethoxylation is on average from 5 to 25;
(ii) ethylene oxide-propylene oxide copolymer, and
(iii) compatibilising surfactant selected from an alkoxylated fatty alcohol, alkoxylated fatty alcohol phosphate ester, and/or alkoxylated glycerides;
for improving the water retention and/or conditioning of soil.

## Patentansprüche

1. Bodenbehandlungsformulierung, umfassend:
(i) ethoxylierten/propoxylierten Fettsäuremonoestern von Sorbitan, bei denen die Kohlenstoffkettenlänge der Fettsäure 8 bis 16 beträgt und der Gesamtethoxylierungsgrad im Durchschnitt 5 bis 25 beträgt,
(ii) Ethylenoxid-Propylenoxid-Copolymer und
(iii) kompatibilisierendem Tensid, ausgewählt aus einem alkoxylierten Fettalkohol, alkoxyliertem Fettalkoholphosphatester und/oder alkoxylierten Glyceriden.

2. Formulierung nach Anspruch 1, wobei es sich bei den ethoxylierten Fettsäuremonoestern von Sorbitan um Verbindungen der Formel (I) handelt:
Sorb-(AOₙ₁R¹)(AOₙ₂R²)(AOₙ₃R³)(AOₙ₄R⁴) (I)
wobei
i) Sorb für einen Rest steht, der durch Entfernen von vier Hydroxyl-H-Atomen aus Sorbitan erhalten wird,
i) AO für einen Ethylenoxy- oder Propylenoxyrest steht,
ii) n1, n2, n3 und n4 jeweils unabhängig für Durchschnittswerte von 0 bis 10, vorzugsweise 0,5 bis 5, stehen,
iii) die Summe n1+n2+n3+n4 hat einen Durchschnittswert von 5 bis 25, insbesondere 8 bis 12, hat und
iv) R¹, R², R³ und R⁴ jeweils unabhängig für H oder eine Acylgruppe -C(O)-R⁵ stehen, wobei R⁵ für eine C₇- bis C₁₃-Hydrocarbyl-, gewöhnlich C₉- bis C₁₃-Hydrocarbyl-, insbesondere etwa C₁₁-Hydrocarbyl-, insbesondere Alkyl- oder Alkenyl-, speziell geradkettige Alkyl- oder Alkenylgruppe steht.

3. Formulierung nach Anspruch 1 oder Anspruch 2, wobei das Ethylenoxid-Propylenoxid-Copolymer ein durchschnittliches Molekulargewicht im Bereich von 1.500 bis 15.000 aufweist.

4. Formulierung nach einem der vorhergehenden Ansprüche, wobei das kompatibilisierende Tensid ein alkoxylierter Fettalkohol mit einer C₄- bis C₃₀-Fettkette ist und 1 bis 30 Oxyalkylengruppen umfasst.

5. Formulierung nach einem der vorhergehenden Ansprüche, wobei das kompatibilisierende Tensid ein alkoxylierter Alkohol der folgenden allgemeinen Formel ist:
R⁶-O-(AO)ₓ-H (II)
wobei
R⁶ für eine geradkettige oder verzweigte, gesättigte oder ungesättigte, substituierte oder unsubstituierte Kohlenwasserstoffgruppe mit 4 bis 30 Kohlenstoffatomen steht,
AO für eine Oxyalkylengruppe steht,
x für eine ganze Zahl im Bereich von 1 bis 30 steht.

6. Verfahren zur Herstellung einer Bodenbehandlungsformulierung nach einem der Ansprüche 1 bis 5, wobei das Verfahren das Mischen von Folgendem umfasst
(i) ethoxylierten/propoxylierten Fettsäuremonoestern von Sorbitan, bei denen die Kohlenstoffkettenlänge der Fettsäure 8 bis 16 beträgt und der Gesamtethoxylierungsgrad im Durchschnitt 5 bis 25 beträgt,
(ii) Ethylenoxid-Propylenoxid-Copolymer und
(iii) kompatibilisierendem Tensid, ausgewählt aus einem alkoxylierten Fettalkohol, alkoxyliertem Fettalkoholphosphatester und/oder alkoxylierten Glyceriden.

7. Agrochemische Formulierung, die zur Anwendung auf Pflanzenwuchs und/oder Boden geeignet ist, wobei die Formulierung eine verdünnte Bodenbehandlungsformulierung nach einem der Ansprüche 1 bis 5 und gegebenenfalls mindestens einen agrochemischen Wirkstoff und/oder Nährstoff umfasst.

8. Verwendung einer Bodenbehandlungsformulierung, umfassend
(i) ethoxylierten/propoxylierten Fettsäuremonoestern von Sorbitan, bei denen die Kohlenstoffkettenlänge der Fettsäure 8 bis 16 beträgt und der Gesamtethoxylierungsgrad im Durchschnitt 5 bis 25 beträgt,
(ii) Ethylenoxid-Propylenoxid-Copolymer und
(iii) kompatibilisierendes Tensid, ausgewählt aus einem alkoxylierten Fettalkohol, alkoxyliertem Fettalkoholphosphatester und/oder alkoxylierten Glyceriden,
zur Verbesserung der Wasserrückhaltung und/oder Konditionierung des Bodens.

## Revendications

1. Formulation de traitement du sol comprenant :
(i) des mono-esters d'acides gras éthoxylés/propoxylés de sorbitane dont la longueur de chaîne carbonée de l'acide gras est de 8 à 16, et le degré global d'éthoxylation est en moyenne de 5 à 25 ;
(ii) un copolymère oxyde d'éthylène-oxyde de propylène, et
(iii) un tensioactif compatibilisant choisi parmi un alcool gras alcoxylé, un ester de phosphate d'alcool gras alcoxylé, et/ou des glycérides alcoxylés.

2. Formulation selon la revendication 1, les mono-esters d'acides gras éthoxylés de sorbitane étant des composés de formule (I) :
Sorb-(AOₙ₁R¹)(AOₙ₂R²)(AOₙ₃R³)(AOₙ₄R⁴) (I)
dans laquelle
i) Sorb représente un radical obtenu par élimination de quatre atomes H d'hydroxyle du sorbitane ;
i) AO représente un radical éthylèneoxy ou propylèneoxy ;
ii) n1, n2, n3, et n4 représentent chacun indépendamment des valeurs moyennes de 0 à 10, de préférence 0,5 à 5 ;
iii) le total n1+n2+n3+n4 a une valeur moyenne de 5 à 25, en particulier de 8 à 12 ; et
iv) R¹, R², R³, et R⁴ représentent chacun indépendamment H ou un groupe acyle -C(O)-R⁵, où R⁵ est un groupe hydrocarbyle en C₇ à C₁₃, plus habituellement hydrocarbyle en C₉ à C₁₃, en particulier hydrocarbyle en C₁₁, en particulier alkyle ou alcényle, notamment alkyle ou alcényle linéaire.

3. Formulation selon la revendication 1 ou la revendication 2, dans laquelle le copolymère oxyde d'éthylène-oxyde de propylène a un poids moléculaire moyen dans la plage de
1 500 à 15 000.

4. Formulation selon l'une quelconque des revendications précédentes, dans laquelle le tensioactif compatibilisant est un alcool gras alcoxylé ayant une chaîne grasse en C₄ à C₃₀ et comprenant de 1 à 30 groupes oxyalkylène.

5. Formulation selon l'une quelconque des revendications précédentes, dans laquelle le tensioactif compatibilisant est un alcool alcoxylé de formule générale :
R⁶-O-(AO)ₓ-H (II)
dans laquelle
R⁶ est un groupe hydrocarboné, saturé ou insaturé, substitué ou non substitué, à chaîne droite ou ramifiée, ayant de 4 à 30 atomes de carbone ;
AO est un groupe oxyalkylène ; et
x représente un entier dans la plage allant de 1 à 30.

6. Procédé de préparation d'une formulation de traitement du sol selon l'une quelconque des revendications 1 à 5, ledit procédé comprenant le mélange
(i) des mono-esters d'acides gras éthoxylés/propoxylés de sorbitane dont la longueur de chaîne carbonée de l'acide gras est de 8 à 16, et le degré global d'éthoxylation est en moyenne de 5 à 25 ;
(ii) d'un copolymère oxyde d'éthylène-oxyde de propylène, et
(iii) d'un tensioactif compatibilisant choisi parmi un alcool gras alcoxylé, un ester de phosphate d'alcool gras alcoxylé, et/ou des glycérides alcoxylés.

7. Formulation agrochimique appropriée pour une application sur la végétation et/ou le sol, ladite formulation comprenant une formulation diluée de traitement du sol selon l'une quelconque des revendications 1 à 5, et éventuellement au moins un agent actif et/ou nutriment agrochimique.

8. Utilisation d'une formulation pour le traitement du sol comprenant
(i) des mono-esters d'acides gras éthoxylés/propoxylés de sorbitane dont la longueur de chaîne carbonée de l'acide gras est de 8 à 16, et le degré global d'éthoxylation est en moyenne de 5 à 25 ;
(ii) un copolymère oxyde d'éthylène-oxyde de propylène, et
(iii) un tensioactif compatibilisant choisi parmi un alcool gras alcoxylé, un ester de phosphate d'alcool gras alcoxylé, et/ou des glycérides alcoxylés ;
pour améliorer la rétention d'eau et/ou le conditionnement du sol.
